(19) Europäisches Patentamt

European Patent Office

Office européen des brevets

(11) **EP 0 639 114 B1**

(12) **EUROPEAN PATENT SPECIFICATION**

(45) Date of publication and mention
of the grant of the patent:
**09.08.2000 Bulletin 2000/32**

(51) Int. Cl.[7]: **B01L 3/00**

(86) International application number:
**PCT/US93/04252**

(21) Application number: **93911082.1**

(22) Date of filing: **05.05.1993**

(87) International publication number:
**WO 93/22056 (11.11.1993 Gazette 1993/27)**

(54) **CONTAINER AND CLOSURE SYSTEM FOR MAINTAINING STABILITY OF SODIUM HYPOCHLORITE SOLUTIONS**

BEHÄLTER UND VERSCHLUSS ZUR AUFRECHTERHALTUNG DER STABILITÄT VON NATRIUMHYPOCHLORITLÖSUNGEN

SYSTEME DE RECIPIENT ET DE FERMETURE DESTINE A MAINTENIR LA STABILITE DE SOLUTIONS D'HYPOCHLORITE DE SODIUM

(84) Designated Contracting States:
**AT BE CH DE DK ES FR GB GR IE IT LI NL PT SE**

(30) Priority: **06.05.1992 US 878633**

(43) Date of publication of application:
**22.02.1995 Bulletin 1995/08**

(73) Proprietor: **MALLINCKRODT INC.**
**St. Louis, MO 63134 (US)**

(72) Inventor: **WOLFANGEL, Robert, G.**
**Ballwin, MO 63021 (US)**

(74) Representative:
**Jones, Alan John et al**
**CARPMAELS & RANSFORD**
**43 Bloomsbury Square**
**London, WC1A 2RA (GB)**

(56) References cited:
**EP-A- 0 294 127          WO-A-90/02150**
**US-A- 4 614 276          US-A- 4 888 172**
**US-A- 4 999 375**

- **Scientific Products General Catalog-Baxter, 1991-1992, pages 455 and 458-459, see entire document.**
- **Aldrich Catalog-Aldrich Chemical Company, Inc., 1988, pages 1347 and 1853-1856, see entire document.**

EP 0 639 114 B1

**Description**

Background

The present invention relates to a system for maintaining stability of sterile sodium hypochlorite solutions. Sodium hypochlorite (NaOCl) is one of the essential ingredients used in the preparation of Tc-99m labelled erythrocytes. For this application, NaOCl is commonly prepared by dilution of reagent grade NaOCl (5.25% W/V), with normal saline to achieve a concentration of 0.1%. It has been observed that NaOCl solutions diluted in this manner are relatively unstable, and as a precaution are prepared as close as possible to the time of use.

Studies have been conducted on the stability of bulk, non-sterile sodium hypochlorite, most notably those of Fabian et al, Stability of Sodium Hypochlorite, Am. J. Hosp. Pharm., 1982, 39:1016-17; and Morris et al, The Stability of Diluted Hypochlorite Solution, Aust. J. Hosp. Pharm.., 10(3):1016-117, 1980. These studies indicated that dilute NaOCl solutions were somewhat stable for periods ranging from one to two years. However, the data presented showed wide differences in the degree of stability achieved for NaOCl, without any apparent reason for the differing results.

Many other studies have been carried out in attempts to prepare stable NaOCl solutions by the inclusion of stabilizers or other additives. In every case known, the addition of stabilizers or additives resulted in even more rapid degradation of the NaOCl solution.

Therefore, there remains a need for a reliable and predictable means to maintain the stability of NaOCl solutions over an extended period of time.

Objects Of The Invention

One object of the present invention is to provide a means for preparing sterile solutions of dilute NaOCl and maintaining the stability thereof for periods of at least one year.

Summary Of The Invention

The system of the present invention is set forth in the Claims.

This system is capable of maintaining the stability of NaOCl solutions for periods of at least one year. In particular, the present invention provides a system which avoids the addition of all chemical additives, and carefully controls pH and exposure to light.

Detailed Description Of The Invention

An initial study was carried out in order to determine the causes for reduction in stability of NaOCl solutions. This study indicated that the stability of NaOCl solutions is effected by the type of container and closure used, concentration, storage temperature and exposure to light.

In particular, solutions containing 0.1% to 5.0% NaOCl in basic normal saline were tested for stability. FIve different concentrations of NaOCl were tested; 0.1%, 0.5%, 1.0%, 2.5%, and 5.0%. Each of the five concentrations was stored in small vials of polypropylene and of glass, at four different storage conditions; 50°C. 25°C in light. 25°C in darkness, and 5°C. The results of this study are shown in the following Tables 1-10.

TABLE 1

| 5% NaOCL - Glass Vial | | | | | |
|---|---|---|---|---|---|
| | DAYS ON STABILITY | | | | |
| CONDITION | 1 | 10 | 17 | 28 | 41 |
| 5°C | 4.7 | 4.7 | 4.7 | 4.8 | - |
| 25°C Light | 4.7 | 4.4 | 4.7 | 4.7 | 3.7 |
| 25°C Dark | 4.7 | 4.6 | 4.4 | 4.4 | 4.5 |
| 50°C | 4.7 | 3.7 | 3.7 | 3.0 | - |

TABLE 2

| 5% NaOCL - Plastic Vial | | | | |
| --- | --- | --- | --- | --- |
| | DAYS ON STABILITY | | | |
| CONDITION | 1 | 11 | 25 | 41 |
| 5°C | 4.8 | 4.8 | 4.5 | 4.6 |
| 25°C Light | 4.8 | 4.5 | 4.0 | 3.8 |
| 25°C Dark | 4.8 | 4.5 | 4.4 | 4.4 |
| 50°C | 4.8 | 4.2 | 0.5 | 0.1 |

TABLE 3

| 2.5% NaOCL - Glass Vial | | | | |
| --- | --- | --- | --- | --- |
| | DAYS ON STABILITY | | | |
| CONDITION | 1 | 10 | 25 | 41 |
| 5°C | 2.35 | 2.35 | 2.35 | 2.25 |
| 25°C Light | 2.35 | 2.2 | 2.1 | 1.95 |
| 25°C Dark | 2.35 | 2.3 | 2.35 | 2.35 |
| 50°C | 2.35 | 2.5 | 1.8 | 1.6 |

TABLE 4

| 2.5% NaOCL - Plastic Vial | | | | |
| --- | --- | --- | --- | --- |
| | DAYS ON STABILITY | | | |
| CONDITION | 1 | 11 | 27 | 41 |
| 5°C | 2.4 | 2.8 | 2.3 | 2.35 |
| 25°C Light | 2.4 | 2.55 | 1.9 | 1.8 |
| 25°C Dark | 2.4 | 2.45 | 2.3 | 2.35 |
| 50°C | 2.4 | 2.2 | 1.1 | .15 |

TABLE 5

| 1% NaOCL - Glass Vial | | | | |
| --- | --- | --- | --- | --- |
| | DAYS ON STABILITY | | | |
| CONDITION | 1 | 10 | 25 | 42 |
| 5°C | .94 | .93 | .92 | .93 |
| 25°C Light | .94 | .85 | .78 | .72 |

TABLE 5 (continued)

| 1% NaOCL - Glass Vial | | | | |
|---|---|---|---|---|
| | DAYS ON STABILITY | | | |
| CONDITION | 1 | 10 | 25 | 42 |
| 25°C Dark | .94 | .90 | .92 | .92 |
| 50°C | .94 | .88 | .78 | .64 |

TABLE 6

| 1% NaOCL - Plastic Vial | | | | |
|---|---|---|---|---|
| | DAYS ON STABILITY | | | |
| CONDITION | 1 | 11 | 27 | 45 |
| 5°C | .94 | .96 | .88 | .92 |
| 25°C Light | .94 | .91 | .76 | .72 |
| 25°C Dark | .94 | .91 | .88 | .92 |
| 50°C | .94 | .89 | .80 | .60 |

TABLE 7

| 0.5% NaOCL - Glass Vial | | | | |
|---|---|---|---|---|
| | DAYS ON STABILITY | | | |
| CONDITION | 1 | 10 | 20 | 42 |
| 5°C | .48 | .47 | .47 | .49 |
| 25°C Light | .48 | .47 | .43 | .40 |
| 25°C Dark | .48 | .48 | .45 | - |
| 50°C | .48 | .48 | .45 | .42 |

TABLE 8

| 0.5% NaOCL - Plastic Vial | | | | |
|---|---|---|---|---|
| | DAYS ON STABILITY | | | |
| CONDITION | 1 | 11 | 27 | 44 |
| 5°C | .48 | .48 | .47 | .45 |
| 25°C Light | .48 | .44 | .43 | .39 |
| 25°C Dark | .48 | .47 | .47 | .47 |
| 50°C | .48 | .46 | .43 | .42 |

TABLE 9

| 0.1% NaOCL - Glass Vial | | | | |
|---|---|---|---|---|
| | DAYS ON STABILITY | | | |
| CONDITION | 1 | 11 | 20 | 45 |
| 5°C | .096 | .091 | .091 | - |
| 25°C Light | .096 | .092 | .084 | - |
| 25°C Dark | .096 | .088 | .093 | - |
| 50°C | .096 | .085 | .084 | .066 |

TABLE 10

| 0.1% NaOCL - Plastic Vial | | | | |
|---|---|---|---|---|
| | DAYS ON STABILITY | | | |
| CONDITION | 1 | 11 | 27 | 45 |
| 5°C | .096 | .094 | .094 | .090 |
| 25°C Light | .096 | .086 | .084 | .070 |
| 25°C Dark | .096 | .093 | .090 | .086 |
| 50°C | .096 | 0.88 | .086 | 0.72 |

As the above tables show, the solutions were generally less stable at higher temperatures and under light, as was expected. However, it was discovered that solutions having higher starting concentrations generally degraded much more rapidly under heat than those at lower starting concentrations. Also, in the 5% and 2.5% NaOCl solutions, degradation was faster in plastic than in glass, and in both cases, the NaOCl was essentially gone after six weeks at 50°C when stored in the plastic vials, while decomposition was slower in the glass vials. This suggests that polypropylene may have an effect on NaOCl stability. Collectively, this preliminary six week stability evaluation indicated that maintaining NaOCl for periods up to one year was not likely.

Following the initial study described above, a screening program was initiated to identify a preferred container and closure system which would be useful for maintaining sterile NaOCl at acceptable concentration levels for a period of at least one year when stored at room temperature.

In particular, a study was carried out to identify a pharmaceutically acceptable container and closure system which would preserve 0.1% NaOCl solutions at a potency of 0.08% or more for a period of at least one year when stored at room temperature.

NaOCl is well known to be sensitive to light, pH, and a variety of cations which may catalyze decomposition, storage temperature, and concentration. Depending on the environment NaOCl will normally decompose by one of three alternate pathways.

1) At low pH, the primary pathway of decomposition is by liberation of chlorine.
2) Oxygen is liberated from NaOCl in the presence of a variety of organic and inorganic catalysts, particularly Ca, Ni, and Cu.
3) NaOCl may undergo slow, concentration dependent, auto-decomposition when stored at high pH and protected from light.

Based on this known chemistry, it is postulated that an optimum storage environment for NaOCl would be a light protected, high pH environment using a container and closure system that would not contribute chemicals which would promote decomposition.

The container and closure identification study carried out was set up as a matrix experiment to compare the effectiveness of USP Type I glass vials and polypropylene plastic vials, importance of pH, and a variety of elastomeric closures. A solution of 0.1% NaOCl was prepared by diluting NaOCl with water for injection, resulting in an unadjusted pH of 11.3. This pH 11.3, 0.1% NaOCl solution was dispensed into six different container and closure combinations. (Series A). Both 2 and 3 mL vials were used, and each vial was filled to its nominal volume, i.e. 2 mL in 2 mL vials and 3 mL in 3 mL vials. Sodium hydroxide was added to the remaining bulk solution to adjust the pH to 12.0 and four additional container and closure combinations were dispensed. (Series B). Two other series of dispensed vials were also prepared. THe first such series was a mixture of NaOCl with ACD (series C), while the second such series was a mixture of NaOCL with EDTA (Series D). Both Series C and D showed such rapid and complete decomposition of NaOCl, that zero values were obtained as an initial test point, thus confirming the sensitivity of NaOCl to chemical additives. Study of Series C and D was then discontinued. A sumary of the dispensed vials are listed in Table 11.

TABLE 11

| Group | pH | Container | Closure |
|-------|------|------------------|----------------------|
| I-A | 11.3 | 2 mL Type I Glass | West 541 Red/Teflon |
| II-A | 11.3 | 2 mL Type I Glass | West 1888 Gray/Teflon |
| III-A | 11.3 | 2 mL Type I Glass | Faultless 1534 Red |
| IV-A | 11.3 | 2 mL Type I Glass | Tompkins H0852 |
| V-A | 11.3 | 2 mL Type I Glass | D77E/A13R |
| VI-A | 11.3 | 3 mL Type I Glass | Tompkins H0852A2 |
| I-B | 12.0 | 3 mL P/P Plastic | West 541 Red/Teflon |
| II-B | 12.0 | 2 mL Type I Glass | West 541 Red/Teflon |
| III-B | 12.0 | 2 mL Type I Glass | West 1888 Gray/Teflon |
| IV-B | 12.0 | 3 mL P/P Plastic | West 1888 Gray/Teflon |

All of the dispensed vials were stored in a dark cabinet at room temperature. The vials were stored on their sides to assure direct contact of the NaOCl with the closure. At periodic intervals, sample vials from each group were titrated for NaOCl concentration, using the USP XXI method of assay without modification, except for the much smaller volumes of NaOCl solution necessitated by the relatively small 2 and 3 mL vials. Triplicate samples (S-1, S-2, and S-3) of NaOCl were removed using a Hamilton syringe and transferred to a clean dry test tube. A granule of KI was added to the tube followed immediately with 0.2-0.3 mL of 6N acetic acid. Volumetric N/10 sodium thiosulfate was used to titrate the sample until a slight yellow color was observed. A starch indicator was added and titration continued to a colorless end point.

Concentration of NaOCl was calculated as follows:

$$\%NaOCL = \frac{N \text{ sodium thiosulfate X mL sodium thiosulfate X } 37.22}{\text{volume of sample (mL) X } 10}$$

The results of this identification study are shown in the following Tables 12-21. Assay of particular sample groups was discontinued when it became obvious that all samples in the group had lost their potency. Sample groups which continued to show good assay values were studied for nearly two years (695 days).

TABLE 12

| Sample | I-A |
| --- | --- |
| pH | 11.3 |
| Container | USP Type I Glass Wheaton Serum Bottle 2 mL |
| Closure | W541/T West Co Natural Rubber, Sulfur Cured, Teflon Faced |

| AGE (Days) | ML TITRANT | | | % SOD HYPO | % ORIG STRENGTH |
| --- | --- | --- | --- | --- | --- |
| | S-1 | S-2 | S-3 | | |
| 0 | 0.0348 | 0.0348 | 0.0349 | 0.0926 | 100.00 |
| 12 | 0.0347 | 0.0348 | 0.0348 | 0.0924 | 99.81 |
| 28 | 0.0349 | 0.0348 | 0.0349 | 0.0927 | 100.10 |
| 41 | 0.0350 | 0.0340 | 0.0340 | 0.0912 | 98.56 |
| 70 | 0.0339 | 0.0329 | 0.0329 | 0.0883 | 95.41 |
| 112 | 0.0328 | 0.0328 | 0.0328 | 0.0872 | 94.16 |
| 168 | 0.0298 | 0.0298 | 0.0298 | 0.0792 | 85.55 |
| 234 | 0.0248 | 0.0248 | 0.0248 | 0.0659 | 71.20 |
| 293 | 0.0273 | 0.0271 | 0.0273 | 0.0724 | 78.18 |
| 362 | 0.0233 | 0.0222 | 0.0234 | 0.0610 | 65.93 |
| 455 | 0.0217 | 0.0217 | 0.0217 | 0.0577 | 62.31 |
| 578 | 0.0019 | 0.0020 | 0.0021 | 0.0053 | 5.74 |
| 695 | 0.0008 | 0.0024 | 0.0136 | 0.0149 | 16.08 |

TABLE 13

| Sample | II-A |
| --- | --- |
| pH | 11.3 |
| Container | USP Type I Glass Wheaton Serum Bottle 2 mL |
| Closure | W1888/T West Co Halo-butyl Isoprene Blend, Teflon Coated |

| AGE (Days) | ML TITRANT | | | % SOD HYPO | % ORIG STRENGTH |
| --- | --- | --- | --- | --- | --- |
| | S-1 | S-2 | S-3 | | |
| 0 | 0.0349 | 0.0349 | 0.0348 | 0.0927 | 100.00 |
| 12 | 0.0348 | 0.0347 | 0.0348 | 0.0924 | 99.71 |
| 28 | 0.0348 | 0.0348 | 0.0349 | 0.0926 | 99.90 |
| 41 | 0.0350 | 0.0350 | 0.0350 | 0.0930 | 100.38 |
| 70 | 0.0349 | 0.0349 | 0.0349 | 0.0927 | 100.10 |
| 112 | 0.0348 | 0.0348 | 0.0348 | 0.0925 | 99.81 |
| 168 | 0.0348 | 0.0338 | 0.0344 | 0.0912 | 98.47 |
| 234 | 0.0348 | 0.0348 | 0.0348 | 0.0925 | 99.81 |
| 293 | 0.0344 | 0.0343 | 0.0345 | 0.0914 | 98.66 |
| 362 | 0.0339 | 0.0340 | 0.0339 | 0.0902 | 97.32 |
| 455 | 0.0338 | 0.0337 | 0.0337 | 0.0896 | 96.75 |

TABLE 13 (continued)

| Sample | II-A | | | | |
| --- | --- | --- | --- | --- | --- |
| pH | 11.3 | | | | |
| Container | USP Type I Glass Wheaton Serum Bottle 2 mL | | | | |
| Closure | W1888/T West Co Halo-butyl Isoprene Blend, Teflon Coated | | | | |

| AGE (Days) | ML TITRANT | | | % SOD HYPO | % ORIG STRENGTH |
| --- | --- | --- | --- | --- | --- |
| 578 | 0.0336 | 0.0336 | 0.0332 | 0.0889 | 95.98 |
| 695 | 0.0329 | 0.0322 | 0.0330 | 0.0869 | 93.79 |

TABLE 14

| Sample | III-A | | | | |
| --- | --- | --- | --- | --- | --- |
| pH | 11.3 | | | | |
| Container | USP Type I Glass Wheaton Serum Bottle 2 mL | | | | |
| Closure | F1534R | | | | |

| AGE (Days) | ML TITRANT | | | % SOD HYPO | % ORIG STRENGTH |
| --- | --- | --- | --- | --- | --- |
| | S-1 | S-2 | S-3 | | |
| 0 | 0.0349 | 0.0349 | 0.0349 | 0.0926 | 100.00 |
| 12 | 0.0348 | 0.0349 | 0.0348 | 0.0926 | 99.95 |
| 28 | 0.0309 | 0.0318 | 0.0309 | 0.0829 | 89.53 |
| 41 | 0.0280 | 0.0280 | 0.0280 | 0.0744 | 80.34 |
| 70 | 0.0208 | 0.0208 | 0.0208 | 0.0553 | 59.68 |
| 112 | 0.0158 | 0.0158 | 0.0158 | 0.0420 | 45.34 |
| 168 | 0.0068 | 0.0058 | 0.0058 | 0.0163 | 17.60 |
| 234 | 0.0018 | 0.0018 | 0.0018 | 0.0048 | 5.16 |
| 293 | 0.0004 | 0.0002 | 0.0003 | 0.0007 | 0.79 |
| 362 | 0.0000 | 0.0000 | 0.0000 | 0.0000 | 0.00 |
| 578 | 0.0007 | 0.0003 | 0.0002 | 0.0010 | 1.06 |

TABLE 15

| Sample | IV-A | | | | |
| --- | --- | --- | --- | --- | --- |
| pH | 11.3 | | | | |
| Container | USP Type I Glass Wheaton Serum Bottle 2 mL | | | | |
| Closure | T 13-506 H0852 Butadiene Acrylonitrile Synthetic Rubber Tompkins | | | | |

| AGE (Days) | ML TITRANT | | | % SOD HYPO | % ORIG STRENGTH |
| --- | --- | --- | --- | --- | --- |
| | S-1 | S-2 | S-3 | | |
| 0 | 0.0349 | 0.0349 | 0.0349 | 0.0926 | 100.00 |
| 12 | 0.0338 | 0.0338 | 0.0338 | 0.0898 | 96.99 |
| 28 | 0.0328 | 0.0328 | 0.0329 | 0.0873 | 94.21 |
| 41 | 0.0320 | 0.0320 | 0.0320 | 0.0850 | 91.82 |

TABLE 15 (continued)

| Sample | IV-A | | | | |
|---|---|---|---|---|---|
| pH | 11.3 | | | | |
| Container | USP Type I Glass Wheaton Serum Bottle 2 mL | | | | |
| Closure | T 13-506 H0852 Butadiene Acrylonitrile Synthetic Rubber Tompkins | | | | |

| AGE (Days) | ML TITRANT | | | % SOD HYPO | % ORIG STRENGTH |
|---|---|---|---|---|---|
| 70 | 0.0289 | 0.0288 | 0.0288 | 0.0766 | 82.74 |
| 112 | 0.0258 | 0.0258 | 0.0258 | 0.0686 | 74.03 |
| 168 | 0.0188 | 0.0178 | 0.0188 | 0.0491 | 52.99 |
| 234 | 0.0158 | 0.0158 | 0.0158 | 0.0420 | 45.34 |
| 293 | 0.0005 | 0.0008 | 0.0007 | 0.0016 | 1.76 |
| 362 | 0.0016 | 0.0016 | 0.0016 | 0.0040 | 4.28 |
| 578 | 0.0008 | 0.0008 | 0.0008 | 0.0020 | 2.11 |

TABLE 16

| Sample | V-A | | | | |
|---|---|---|---|---|---|
| pH | 11.3 | | | | |
| Container | USP Type I Glass Wheaton Serum Bottle 2 mL | | | | |
| Closure | D77E/A13R | | | | |

| AGE (Days) | ML TITRANT | | | % SOD HYPO | % ORIG STRENGTH |
|---|---|---|---|---|---|
| | S-1 | S-2 | S-3 | | |
| 0 | 0.0349 | 0.0349 | 0.0349 | 0.0926 | 100.00 |
| 12 | 0.0308 | 0.0309 | 0.0308 | 0.0819 | 88.47 |
| 28 | 0.0089 | 0.0088 | 0.0089 | 0.0236 | 25.44 |
| 41 | 0.0260 | 0.0260 | 0.0260 | 0.0691 | 74.61 |
| 70 | 0.0010 | 0.0010 | 0.0010 | 0.0027 | 2.87 |
| 112 | 0.0008 | 0.0010 | 0.0010 | 0.0025 | 2.68 |
| 168 | 0.0000 | 0.0000 | 0.0000 | 0.0000 | 0.00 |
| 234 | 0.0000 | 0.0000 | 0.0000 | 0.0000 | 0.00 |
| 293 | 0.0000 | 0.0000 | 0.0000 | 0.0000 | 0.00 |
| 362 | 0.0000 | 0.0000 | 0.0000 | 0.0000 | 0.00 |
| 578 | 0.0000 | 0.0000 | 0.0000 | 0.0000 | 0.00 |

TABLE 17

| Sample | VI-A |
|---|---|
| pH | 11.3 |
| Container | USP Type I Glass Vial, 3 mL |
| Closure | T 13-70 H0852A2 Tompkins Butadiene Acrylonitrile Synthetic Rubber |

| AGE (Days) | ML TITRANT | | | % SOD HYPO | % ORIG STRENGTH |
|---|---|---|---|---|---|
| | S-1 | S-2 | S-3 | | |
| 0 | 0.0349 | 0.0349 | 0.0349 | 0.0926 | 100.00 |
| 12 | 0.0327 | 0.0328 | 0.0328 | 0.0871 | 94.02 |
| 28 | 0.0308 | 0.0308 | 0.0309 | 0.0819 | 88.47 |
| 41 | 0.0280 | 0.0280 | 0.0280 | 0.0744 | 80.34 |
| 70 | 0.0268 | 0.0268 | 0.0268 | 0.0712 | 76.90 |
| 112 | 0.0248 | 0.0248 | 0.0248 | 0.0659 | 71.16 |
| 168 | 0.0108 | 0.0109 | 0.0109 | 0.0289 | 31.18 |
| 234 | 0.0038 | 0.0038 | 0.0038 | 0.0101 | 10.90 |
| 293 | 0.0028 | 0.0023 | 0.0024 | 0.0061 | 6.60 |
| 362 | 0.0000 | 0.0000 | 0.0000 | 0.0000 | 0.00 |
| 578 | 0.0000 | 0.0000 | 0.0000 | 0.0000 | 0.00 |

TABLE 18

| Sample | I-B |
|---|---|
| pH | 12.0 |
| Container | Wheaton Plastic 3cc Serum Vial natural P/P (K213) B21707 |
| Closure | W541/T West Co Natural Rubber, Sulfur Cured, Teflon Faced |

| AGE (Days) | ML TITRANT | | | % SOD HYPO | % ORIG STRENGTH |
|---|---|---|---|---|---|
| | S-1 | S-2 | S-3 | | |
| 0 | 0.0337 | 0.0336 | 0.0328 | 0.0887 | 100.00 |
| 12 | 0.0348 | 0.0348 | 0.0348 | 0.0925 | 104.30 |
| 28 | 0.0349 | 0.0349 | 0.0349 | 0.0927 | 104.60 |
| 41 | 0.0340 | 0.0340 | 0.0340 | 0.0904 | 101.90 |
| 70 | 0.0333 | 0.0333 | 0.0333 | 0.0885 | 99.86 |
| 112 | 0.0328 | 0.0328 | 0.0328 | 0.0872 | 98.30 |
| 168 | 0.0328 | 0.0328 | 0.0328 | 0.0872 | 98.30 |
| 234 | 0.0268 | 0.0268 | 0.0268 | 0.0712 | 80.32 |
| 293 | 0.0225 | 0.0222 | 0.0219 | 0.0590 | 66.53 |
| 362 | 0.0158 | 0.0153 | 0.0157 | 0.0415 | 46.75 |
| 455 | 0.0277 | 0.0278 | 0.0275 | 0.0735 | 82.92 |
| 578 | 0.0028 | 0.0026 | 0.0024 | 0.0069 | 7.79 |
| 695 | 0.0000 | 0.0030 | 0.0057 | 0.0077 | 8.69 |

TABLE 19

| Sample | II-B | | | | |
|---|---|---|---|---|---|
| pH | 12.0 | | | | |
| Container | USP Type I Glass Wheaton Serum Bottle 2 mL | | | | |
| Closure | W541/T West Co Natural Rubber, Sulfur Cured, Teflon Faced | | | | |

| AGE (Days) | ML TITRANT | | | % SOD HYPO | % ORIG STRENGTH |
|---|---|---|---|---|---|
| | S-1 | S-2 | S-3 | | |
| 0 | 0.0349 | 0.0348 | 0.0349 | 0.0927 | 100.00 |
| 12 | 0.0348 | 0.0348 | 0.0348 | 0.0925 | 99.81 |
| 28 | 0.0349 | 0.0349 | 0.0348 | 0.0927 | 100.00 |
| 41 | 0.0340 | 0.0340 | 0.0350 | 0.0912 | 98.47 |
| 70 | 0.0348 | 0.0338 | 0.0338 | 0.0907 | 97.90 |
| 112 | 0.0311 | 0.0318 | 0.0308 | 0.0830 | 89.58 |
| 168 | 0.0298 | 0.0298 | 0.0299 | 0.0793 | 85.56 |
| 234 | 0.0248 | 0.0248 | 0.0248 | 0.0659 | 71.13 |
| 293 | 0.0109 | 0.0112 | 0.0112 | 0.0295 | 31.84 |
| 362 | 0.0217 | 0.0221 | 0.0226 | 0.0588 | 63.48 |
| 455 | 0.0059 | 0.0056 | 0.0054 | 0.0150 | 16.16 |
| 578 | 0.0088 | 0.0089 | 0.0089 | 0.0236 | 25.43 |
| 695 | 0.0000 | 0.0070 | 0.0058 | 0.0113 | 12.24 |

TABLE 20

| Sample | III-B | | | | |
|---|---|---|---|---|---|
| pH | 12.0 | | | | |
| Container | USP Type I Glass Wheaton Serum Bottle 2 mL | | | | |
| Closure | W1888G/T West Co Halo-butyl Isoprene Blend, Teflon Coated | | | | |

| AGE (Days) | ML TITRANT | | | % SOD HYPO | % ORIG STRENGTH |
|---|---|---|---|---|---|
| | S-1 | S-2 | S-3 | | |
| 0 | 0.0350 | 0.0349 | 0.0349 | 0.0928 | 100.00 |
| 12 | 0.0347 | 0.0348 | 0.0348 | 0.0924 | 99.52 |
| 28 | 0.0348 | 0.0348 | 0.0348 | 0.0925 | 99.62 |
| 41 | 0.0349 | 0.0349 | 0.0348 | 0.0927 | 99.81 |
| 70 | 0.0349 | 0.0340 | 0.0349 | 0.0919 | 99.05 |
| 112 | 0.0339 | 0.0340 | 0.0338 | 0.0901 | 97.04 |
| 168 | 0.0348 | 0.0348 | 0.0348 | 0.0925 | 99.62 |
| 234 | 0.0348 | 0.0348 | 0.0348 | 0.0925 | 99.62 |
| 293 | 0.0339 | 0.0339 | 0.0340 | 0.0902 | 97.14 |
| 362 | 0.0334 | 0.0333 | 0.0338 | 0.0890 | 95.90 |

TABLE 20 (continued)

| Sample III-B |
|---|
| pH 12.0 |
| Container USP Type I Glass Wheaton Serum Bottle 2 mL |
| Closure W1888G/T West Co Halo-butyl Isoprene Blend, Teflon Coated |

| AGE (Days) | ML TITRANT | | | % SOD HYPO | % ORIG STRENGTH |
|---|---|---|---|---|---|
| 455 | 0.0333 | 0.0334 | 0.0334 | 0.0887 | 95.52 |
| 578 | 0.0323 | 0.0331 | 0.0330 | 0.0872 | 93.89 |
| 695 | 0.0332 | 0.0334 | 0.0330 | 0.0882 | 95.04 |

TABLE 21

| Sample IV-B |
|---|
| pH 12.0 |
| Container Wheaton Plastic 3 cc Serum Vial Natural P/P (K213) B31707 |
| Closure W1888G/T West Co Halo-butyl Isoprene Blend Teflon Coated |

| AGE (Days) | ML TITRANT | | | % SOD HYPO | % ORIG STRENGTH |
|---|---|---|---|---|---|
| | S-1 | S-2 | S-3 | | |
| 0 | 0.0348 | 0.0348 | 0.0348 | 0.0925 | 100.00 |
| 12 | 0.0348 | 0.0348 | 0.0348 | 0.0925 | 100.00 |
| 28 | 0.0348 | 0.0348 | 0.0349 | 0.0926 | 100.10 |
| 41 | 0.0348 | 0.0340 | 0.0340 | 0.0911 | 98.47 |
| 70 | 0.0348 | 0.0339 | 0.0339 | 0.0909 | 98.28 |
| 112 | 0.0328 | 0.0328 | 0.0329 | 0.0873 | 94.35 |
| 168 | 0.0328 | 0.0328 | 0.0328 | 0.0872 | 94.25 |
| 234 | 0.0328 | 0.0328 | 0.0328 | 0.0872 | 94.25 |
| 293 | 0.0288 | 0.0287 | 0.0279 | 0.0757 | 81.80 |
| 362 | 0.0316 | 0.0313 | 0.0310 | 0.0832 | 89.94 |
| 455 | 0.0300 | 0.0298 | 0.0301 | 0.0796 | 86.11 |
| 578 | 0.0299 | 0.0298 | 0.0300 | 0.0795 | 85.92 |
| 695 | 0.0295 | 0.0281 | 0.0280 | 0.0758 | 81.99 |

This identification study showed remarkable differences in the ability of the various container and closure systems to preserve chemical potency of NaOCl. In particular, systems having elastomeric closures which were not coated with teflon, exhibited a pronounced decrease in NaOCl concentration during the first month of the study. In contrast, both teflon coated stopper types (West 541 red/teflon and West 1888 gray/teflon) preserved the NaOCl for at least three months. After three months, only the 1888 gray/teflon coated stopper continued to be effective.

In addition, the results clearly show that USP type I glass vials were more effective at preserving the chemical potency of NaOCl than polypropylene plastic vials.

In a further test, three separate lots of 0.1% NaOCl solutions were dispensed in syringes and tested for stability using the following criteria set forth in Table 22.

TABLE 22

| TEST | LIMITS | NO. OF SAMPLES | TEST INTERVAL |
|---|---|---|---|
| Appearance | Clear, colorless solution essentially free of visible particulate matter | 1 | Each time |
| pH | 11.0 - 13.0 | 1 | Each time |
| Sodium Hypochlorite | 0.08 - 0.11 % w/v | 3 | Each time |
| Physical Appearance | Absence of cracks, peeling, leaking, deformity (each component. Free of deformity on plunger sealing rib. Rubber tip cap in position. Check for change in transparency, and interaction between syringe and plunger. | 3 | Each time |
| Vapor Transmission | Report loss or gain | 2 | Each time |

The syringes used in this study were Hypak 2 1/4 mL colorless USP Type I glass, siliconized syringes. These syringes included closures consisting of a syringe tip of west 890 gray butyl, a threaded plunger (West 1883 gray butyl teflon faced), and a BD plunger rod. Vapor transmission tests were carried out according to the following protocol.

Test two syringes at each test interval.

Technique: Weigh the same syringe at each test interval on a balance having 0.001 G of readability and calculate the weight loss or gain with respect to initial weight.

The prepared syringes were stored under several different conditions, listed below.

A. 25°C, 500-1000 foot candles of light (fc)
B. Controlled Room Temperature (CRT)
C. 37°C at 80% relative humidity (RH)
D. 50°C
E. 5°C
F. Freeze/Thaw stress test conditions

Tests were carried out on the different storage groups according to the schedule shown in Table 23.

TABLE 23

| | STORAGE CONDITIONS | | | | |
|---|---|---|---|---|---|
| Test Interval | 25° C 500-1000 fc | CRT | 37° C 80% RH | 50° C | 5° C |
| Initial | X | X | X | X | X |
| 1 Week | X | X | | | |
| 1 Month | X | X | X | X | |
| 2 Month | X | X | X | X | |
| 3 Month | X | X | X | X | |
| 6 Month | X | X | | | X |
| 12 Month | | X | | | X |
| 18 Month | | X | | | |
| 24 Month | | X | | | |

Results of the above tests are presented in the following Tables 24-26, each table representing one of the three lots of solutions prepared.

13

**EP 0 639 114 B1**

TABLE 24

| Date NaOCl Manufactured 26-May | | | Date Stability Study Initiated | | 15- June | | |
|---|---|---|---|---|---|---|---|
| Container: 2 1/4 mL Syringe, Type I Glass, Siliconized, Code K994 | | | | | | | |
| Closure: Tip - 890 Gray Butyl Code K994; Plunger - 1883 Gray Butyl, Teflon Faced | | | | | | | |
| Storage Condition | Storage Time (Month) | Appearance | pH | % Sodium Hypochlorite | Physical Appearance | Vapor Transmission (+% or -%) | |
| | 0 | Pass | 11.7 | 0.104 | Pass | ND | ND |
| 5°C | 1 | Pass | 11.8 | 0.104 | Pass | ND | ND |
| | 2 | Pass | 11.9 | 0.103 | Pass | ND | ND |
| | 3 | Pass | 11.8 | 0.104 | Pass | ND | ND |
| | 6 | Pass | 11.9 | 0.096 | Pass | 0.00 | 0.00 |
| | 12 | Pass | 11.9 | 0.104 | Pass | 0.01 | 0.02 |
| CRT | 1 | Pass | 11.8 | 0.102 | Pass | 0.00 | -0.01 |
| | 2 | Pass | 11.7 | 0.102 | Pass | -0.01 | -0.01 |
| | 3 | Pass | 11.8 | 0.102 | Pass | 0.00 | 0.00 |
| | 6 | Pass | 11.7 | 0.102 | Pass | -0.03 | -0.03 |
| | 12 | Pass | 11.8 | 0.099 | Pass | -0.02 | -0.02 |
| | 18 | Pass | 11.7 | 0.094 | Pass | -0.04 | -0.04 |
| | 24 | Pass | 11.7 | 0.091 | Pass | -0.03 | -0.04 |
| 37%, 80%RH | 1 | Pass | 11.7 | 0.102 | Pass | 0.02 | 0.02 |
| | 2 | Pass | 11.6 | 0.099 | Pass | 0.01 | 0.01 |
| | 3 | Pass | 11.6 | 0.095 | Pass | 0.02 | 0.02 |
| 50°C | 1 | Pass | 11.6 | 0.097 | Pass | -0.04 | -0.04 |
| | 2 | Pass | 11.6 | 0.094 | Pass | -0.08 | -0.08 |
| | 3 | Pass | 11.5 | 0.092 | Pass | -0.09 | -0.09 |
| 25°C 500-1000fc | 1/4 | Pass | 11.9 | 0.044 | Pass | -0.01 | -0.01 |
| Freeze/Thaw | | Pass | 11.9 | ND | Pass | ND | ND |

ND = test not performed

TABLE 25

| Date NaOCl Manufactured 04-June | | Date Stability Study Initiated | | 15-June | | | |
|---|---|---|---|---|---|---|---|
| Container: | 2 1/4 mL Syringe, Type I Glass, Siliconized, Code K994 | | | | | | |
| Closure: | Tip - 890 Gray Butyl Code K994; Plunger - 1883 Gray Butyl, Teflon Faced | | | | | | |

| Storage Condition | Storage Time (Month) | Appearance | pH | % Sodium Hypochlorite | Physical Appearance | Vapor Transmission (+% or -%) | |
|---|---|---|---|---|---|---|---|
| | 0 | Pass | 11.8 | 0.102 | Pass | ND | ND |
| 5°C | 2 | Pass | 11.9 | 0.102 | Pass | ND | ND |
| | 3 | Pass | 11.9 | 0.102 | Pass | ND | ND |
| | 6 | Pass | 11.8 | 0.098 | Pass | 0.00 | 0.00 |
| | 12 | Pass | 11.9 | 0.101 | Pass | 0.02 | 0.02 |
| CRT | 1 | Pass | 11.8 | 0.102 | Pass | -0.01 | -0.01 |
| | 2 | Pass | 11.7 | 0.102 | Pass | -0.02 | -0.01 |
| | 3 | Pass | 11.8 | 0.102 | Pass | -0.01 | -0.01 |
| | 6 | Pass | 11.7 | 0.098 | Pass | -0.03 | -0.03 |
| | 12 | Pass | 11.8 | 0.097 | Pass | -0.02 | -0.02 |
| | 18 | Pass | 11.7 | 0.097 | Pass | -0.05 | -0.05 |
| | 24 | Pass | 11.8 | 0.093 | Pass | -0.03 | -0.04 |
| 37°C, 80%RH | 1 | Pass | 11.8 | 0.102 | Pass | 0.02 | 0.02 |
| | 2 | Pass | 11.6 | 0.100 | Pass | 0.01 | 0.02 |
| | 3 | Pass | 11.7 | 0.099 | Pass | 0.02 | 0.02 |
| 50°C | 1 | Pass | 11.7 | 0.098 | Pass | -0.04 | -0.04 |
| | 2 | Pass | 11.6 | 0.093 | Pass | -0.07 | -0.07 |
| | 3 | Pass | 11.6 | 0.091 | Pass | -0.08 | -0.09 |
| 25°C 500-1000fc | 1/4 | Pass | 11.8 | 0.099 | Pass | -0.01 | -0.01 |
| | 1 | Pass | 11.8 | 0.081 | Pass | -0.02 | -0.02 |
| | 2 | Pass | 11.7 | 0.061 | Pass | -0.03 | -0.02 |
| Freeze/Thaw | | Pass | 11.9 | ND | Pass | ND | ND |

ND = test not performed

TABLE 26

| Date NaOCl Manufactured 03-June | Date Stability Study Initiated 15-June | | | | | | |
|---|---|---|---|---|---|---|---|
| Container: 2 1/4 mL Syringe, Type I Glass, Siliconized, Code K994 | | | | | | | |
| Closure: Tip - 890 Gray Butyl Code K994; Plunger - 1883 Gray Butyl, Teflon Faced | | | | | | | |
| Storage Condition | Storage Time (Month) | Appearance | pH | % Sodium Hypochlorite | Physical Appearance | Vapor Transmission (+% or -%) | |
| | 0 | Pass | 11.7 | 0.103 | Pass | ND | ND |
| 5°C | 1 | Pass | 11.6 | 0.102 | Pass | ND | ND |
| | 2 | Pass | 11.9 | 0.102 | Pass | ND | ND |
| | 3 | Pass | 11.9 | 0.101 | Pass | ND | ND |
| | 6 | Pass | 11.8 | 0.097 | Pass | 0.00 | 0.00 |
| | 12 | Pass | 11.9 | 0.101 | Pass | 0.01 | 0.02 |
| CRT | 1 | Pass | 11.8 | 0.101 | Pass | -0.01 | -0.01 |
| | 2 | Pass | 11.7 | 0.102 | Pass | -0.02 | -0.02 |
| | 3 | Pass | 11.8 | 0.101 | Pass | -0.01 | -0.01 |
| | 6 | Pass | 11.7 | 0.093 | Pass | -0.04 | -0.04 |
| | 12 | Pass | 11.8 | 0.097 | Pass | -0.03 | -0.02 |
| | 18 | Pass | 11.7 | 0.096 | Pass | -0.05 | -0.06 |
| | 24 | Pass | 11.7 | 0.089 | Pass | -0.04 | -0.04 |
| 37°C, 80%RH | 1 | Pass | 11.7 | 0.099 | Pass | 0.03 | 0.03 |
| | 2 | Pass | 11.7 | 0.100 | Pass | 0.02 | 0.02 |
| | 3 | Pass | 11.7 | 0.096 | Pass | 0.02 | 0.03 |
| 50°C | 1 | Pass | 11.6 | 0.099 | Pass | -0.04 | -0.04 |
| | 2 | Pass | 11.7 | 0.091 | Pass | -0.07 | -0.08 |
| | 3 | Pass | 11.6 | 0.091 | Pass | -0.08 | -0.10 |
| 25°C 500-1000fc | 1/4 | Pass | 11.8 | 0.095 | Pass | -0.01 | -0.01 |
| | 1 | Pass | 11.7 | 0.073 | Pass | -0.02 | -0.02 |
| Freeze/Thaw | | Pass | 11.9 | ND | Pass | ND | ND |

ND = test not performed

The results of these tests shows a trend for NaOCl concentration to decrease very slowly with time, and for increased storage temperature to increase the rate of decomposition. Exposure to intense light produced rapid and significant NaOCl degradation. The syringes showed no evidence of deterioration or quality loss as a result of the freeze/thaw stress test.

From all of the above test data, it is clear that the optimal container and closure system comprises a combination of a Type I glass container with either a West 1888 gray butyl teflon faced stopper or a West 1883 gray butyl teflon faced stopper. In each of these combinations, minimal loss of NaOCl occurred over a period of nearly two years. In particular, when using a glass vial with a West 1888 gray butyl teflon faced stopper, the NaOCl was maintained at about 93.8 % to 95 % of its original strength after 695 days (about 23 months). In similar results, a combination of a glass vial with a 1883 gray butyl teflon faced stopper maintained the NaOCl solution at about 88.3 % of initial concentration after 24 months.

Pharmaceutical preparations intended for parenteral administration must be prepared in sterile form. Ideally, such preparations are filled into their respective containers, and the sealed containers are terminally sterilized using radiation or steam. Alternately, products which are known to be degraded by steam or radiation may be sterilized by filtration, and the sterile product aseptically filled into its intended container

A test to establish whether radiation sterilization would be viable was conducted at several different radiation exposures. It should be noted that accepted radiation sterilization has normally been done at 2.5 megarad, although lower doses may be accepted with proper validation. The results of the radiation sterilization test are shown below in Table 27.

TABLE 27

| Radiation Sterilization Test - 0.1% NaOCl Syringes | | | | | |
| --- | --- | --- | --- | --- | --- |
| Rad Dose (MRAD) | MI Titrant (.1071) | | | % NaOCl | % of Control |
| | S-1 | S-2 | S-3 | | |
| 0 | 0.0369 | 0.0368 | 0.0368 | 0.0977 | 100.0 |
| 5 | 0.0000 | 0.0000 | 0.0000 | 0.0000 | 0.0 |
| 2.5 | 0.0038 | 0.0038 | 0.0028 | 0.0092 | 9.4 |
| 1.25 | 0.0158 | 0.0158 | 0.0148 | 0.0411 | 42.1 |
| 1 | 0.0198 | 0.0198 | 0.0198 | 0.0526 | 53.9 |
| 0.9 | 0.0228 | 0.0218 | 0.0228 | 0.0597 | 61.1 |
| 0.8 | 0.0238 | 0.0238 | 0.0238 | 0.0632 | 64.7 |
| 0.7 | 0.0258 | 0.0248 | 0.0248 | 0.0668 | 68.4 |
| 0.6 | 0.0268 | 0.0268 | 0.0268 | 0.0712 | 72.9 |

As can be seen from the above table, even the lowest exposure of 0.6 megarad resulted in a unacceptable drop in hypochlorite concentration, i.e. 27.1% drop. Therefore, radiation sterilization results in excessive decomposition of the NaOCl and is an unacceptable means of terminal sterilization.

Steam sterilization was also tested according to the following procedure. One mL aliquots of NaOCl solution were dispensed into 1 mL USP Type I glass ampules. Thermal stability was tested by exposing the ampules to temperatures of 115°C and 121°C in a Bier vessel for time periods of 15, 25 and 40 minutes. Following thermal exposure, the samples were analyzed quantitatively for NaOCl as compared with a non-thermally treated controls. Concentration of NaOCl was expressed as a percent of the control. The results of these tests are shown in Table 28.

TABLE 28

| Thermal Stability Test - NaOCl Solutions | | | | | | | | | | |
| --- | --- | --- | --- | --- | --- | --- | --- | --- | --- | --- |
| Temp (°C) | Time (min) | % of Control | Rel St Dev | % NaOCl | Volume of Titrant | | | | | |
| | | | | | S-1 | S-2 | S-3 | S-4 | S-5 | S-6 |
| 115 | 0 | 100 | 1.34 | 0.0987 | 0.0404 | 0.0399 | 0.0404 | 0.0390 | 0.0390 | 0.0390 |
| | 15 | 98.7 | 0.32 | 0.0974 | 0.0391 | 0.0390 | 0.0392 | 0.0391 | 0.0394 | 0.0392 |
| | 25 | 98.6 | 0.24 | 0.0974 | 0.0932 | 0.0392 | 0.0390 | | | |
| | 40 | 97.6 | 0.10 | 0.0963 | 0.0387 | 0.0388 | 0.0387 | 0.0387 | 0.0387 | 0.0387 |
| 121 | 0 | 100 | 1.34 | 0.0987 | 0.0404 | 0.0399 | 0.0404 | 0.0390 | 0.0390 | 0.0390 |
| | 15 | 98.1 | 0.18 | 0.0968 | 0.0390 | 0.0389 | 0.0390 | 0.0389 | 0.0389 | 0.0388 |
| | 25 | 96.9 | 0.56 | 0.0957 | 0.0384 | 0.0386 | 0.0388 | 0.0384 | 0.0381 | 0.0384 |
| | 40 | 95.6 | 0.41 | 0.0943 | 0.0381 | 0.0381 | 0.0380 | 0.0370 | 0.0377 | 0.0378 |

A regression analysis of the data shown in Table 28 was carried out with the following results.

|  | 115°C | 121°C |
|---|---|---|
| Constant | 99.8791 | 99.8643 |
| Std Err of Y Est | 0.2666 | 0.2055 |
| R Squared | 0.9518 | 0.9920 |
| No Of Observations | 4.0000 | 4.0000 |
| Degrees of Freedom | 2.0000 | 2.0000 |
| X Coefficient | -0.0575 | -0.1114 |
| St Err of Coefficient | 0.0091 | 0.0070 |

The R squared values of both groups indicate that the thermal loss of NaOCl is linear, which allowed the following equations to be derived to describe the extent of NaOCl loss during autoclaving (steam sterilization).

For Autoclaving At 115°C

$$\% \text{ NaOCl} = 99.88 - 0.0575(\text{minutes at } 115°C)$$

For Autoclaving At 121°C

$$\% \text{ NaOCl} = 99.86 - 0.1114(\text{minutes at } 121°C)$$

As is apparent from the test results and regression analysis, the rate of decomposition at 121°C is almost twice that at 115°C. Autoclaving at 115°C results in an immediate drop in concentration of about 2.5% with a resultant reduction of shelf life of almost 40%. However, stability projections based on the regression analysis estimate a shelf life of 32.3 months before the NaOCl solutions reach an unacceptably low level of 80% of initial potency. Therefore, post-fill steam sterilization of NaOCl at 115°C appears feasible.

As noted previously, NaOCl solutions are sensitive to light, pH and a variety of cations or impurities. It is therefore essential that these factors be controlled carefully to enable long shelf life of prepared NaOCl solutions.

Exposure to light is relatively easy to control. In particular, the prepared NaOCl solutions dispensed to the container and closure system according to the present invention, are stored in opaque, light barrier, trays.

pH of the NaOCl solutions is controlled at the time of solution formulation. An example of NaOCl solution preparation is described below.

EXAMPLE 1: Preparation of NaOCl Solutions

Abreviations Used

NaOCl - sodium hypochlorite
WFI - water for injection
NaOH - sodium hydroxide

Formulation Process

Step 1. Assay NaOCl within one day of use to determine potency.

A. Pipet 10.00 mL NaOCl to a 500.00 mL volumetric flask containing about 400 mL of water for injection (WFI). Dilute to mark and mix. Wrap in opaque material (aluminum foil) to protect from light.

B. Quantitatively transfer triplicate samples for titration. Immediately add an excess of KI granules, acidify with dilute acetic acid and titrate with volumetric sodium thiosulfate solution to a pale yellow. Add starch indicator and continue titrating to a colorless endpoint which persists for at least 15 seconds.

C. Calculate the strength of NaOCl as follows:

$$\% \text{ NaOCl} = \frac{\text{mL thiosulfate X N thiosulfate X 37.22 X 500mL}}{\text{sample volume X 10mL X 10}}$$

D. Calculate the volume of NaOCl needed to prepare 5.00L of 0.1% solution.

$$\text{mL of NaOCl} = (5000\text{mL X 1.0mg/mL})/\% \text{ NaOCl X 10}$$

Step 2. Solution Preparation.

A. All glassware must be washed thoroughly in WFI and depyrogenated by dry heat.

B. Add about 4.0 L of cool WFI (25°C) to an accurately calibrated 5.0 L glass vessel. Quantitatively transfer the volume of NaOCl calculated in Step 1.D.

C. Mix and dilute to about 4,900 mL.

D. Check pH and adjust to 11.8 - 12.2 by addition of 1N NaOH. Do not add HCl to lower pH.

E. Dilute to volume and mix.

F. Filter through sterile 0.22 micron membrane filter.

G. Store at controlled room temperature or lower. Protect from light.

Reduction of impurities and cations is accomplished by dispensing the prepared NaOCl solutions to the container and closure system according to the present invention. The following Examples provide information relative to the preparation and dispensing of Hypak 2 1/4 mL colorless USP Type I glass siliconized syringes.

EXAMPLE 2: Preparation of Container and Closure System

The components needed are:

A. Syringe - 2 1/4 mL luer tip B-D syringe barrel, siliconized, with 890 gray rubber tips in place.

B. Syringe Tips - B-D ribbed tip cap, 890 gray, non-siliconized.

C. Syringe Plunger - BD703-12 threaded plunger, 1883 gray teflon faced, presiliconized and sterilized.

D. Plunger Rod - BD plunger rod for 2 1/4 mL Hypak syringe.

The components above are available in ready-to-use sterile units. The syringe barrels are pre-siliconized with tip caps in place and are packaged sterile in a pharmaceutical system. Threaded plungers are also available in a ready-to-use sterile pharmaceutical system.

Example 3: Dispensing of NaOCL to Container and Closure System

1. Dispense 0.6 mL aliquots into the prepared sterile Hypak 2 1/4 B-D syringes.

2. Place the syringes in the Hypak stoppering unit and insert the teflon face 1883 gray threaded plungers at a vacuum setting of 27-29° Hg. The plunger should be positioned to a level where less than 5 mm head space is present between the hypochlorite and plunger.

3. Perform visual inspection on filled units. Reject for particulates, mis-positioned plungers, and mis-aligned plunger rib position.

The foregoing has been a description of certain preferred embodiments of the present invention, but is not intended to limit the invention in any way. Rather, many modifications, variations and changes in details may be made within the scope of the present invention.

**Claims**

1. A system comprising a vial which is closed by a stopper and a dilute sodium hypochlorite solution that is contained in the vial, wherein said vial is a glass vial and said stopper is a halo butyl isoprene blend rubber stopper coated by polytetrafluoroethylene.

2. A system according to claim 1 wherein said sodium hypochlorite solution is sterile.

3. A system according to claim 1 or claim 2 wherein a plurality of systems are stored in an opaque, light-barrier tray.

**Patentansprüche**

1. System, umfassend ein Fläschchen, das mittels eines Stopfens verschlossen ist, sowie eine verdünnte Natriumhypochlorit-Lösung, die in dem Fläschchen enthalten ist, wobei es sich bei dem Fläschchen um ein Glasfläschchen handelt und bei dem Stopfen um einen Stopfen aus einer Halogen-Butylisopren-Gummimischung, der mit Polytetrafluorethylen beschichtet ist.

2. System nach Anspruch 1, wobei die Natriumhypochlorit-Lösung steril ist.

3. System nach Anspruch 1 oder 2, wobei eine Vielzahl von Systemen in einem opaken, Lichtsperrungstablett gelagert ist.

**Revendications**

1. Système comprenant un flacon qui est fermé par un bouchon et une solution d'hypochlorite de sodium diluée qui est contenue dans le flacon, dans lequel ledit flacon est un flacon de verre et ledit bouchon est un bouchon en caoutchouc de mélange de halobutyl-isoprène revêtu de polytétrafluoroéthylène.

2. Système selon la revendication 1, dans lequel ladite solution d'hypochlorite de sodium est stérile.

3. Système selon la revendication 1 ou 2, dans lequel plusieurs systèmes sont stockés dans un casier opaque faisant barrage à la lumière.